# EUROPÄISCHE PATENTSCHRIFT

(11) **EP 1 081 190 B1**
(45) Veröffentlichungstag und Bekanntmachung des Hinweises auf die Patenterteilung: **06.05.2004**
(21) Anmeldenummer: 00116665.1
(22) Anmeldetag: 02.08.2000
(51) Int. Cl.: C08L 71/12, C08L 25/06

(54) **Flammgeschützte thermoplastische Formmassen**
Flameproof thermoplastic moulding masses
Masses de moulage thermoplastiques ignifugés

(30) Priorität: 30.08.1999 DE 19941444
(43) Veröffentlichungstag der Anmeldung: 07.03.2001
(73) Patentinhaber: DEMI Vertriebs- und Beteiligungsgesellschaft mbH, 20459 Hamburg (DE)
(72) Erfinder: Gottschalk, Axel, Dr., 67435 Neustadt (DE); Geprägs, Michael, Dr., 67245 Lambsheim (DE); Wünsch, Josef, Dr., 67105 Schifferstadt (DE); Weber, Martin, Dr., 67487 Maikammer (DE)
(74) Vertreter: Patentanwälte Zellentin & Partner

(56) Entgegenhaltungen:
- EP-A- 0 356 857
- EP-A- 0 550 204
- WO-A-94/24206
- WO-A-97/02299
- WO-A-99/28388
- PATENT ABSTRACTS OF JAPAN vol. 014, no. 294 (C-0732), 26. Juni 1990 (1990-06-26) & JP 02 092947 A (IDEMITSU KOSAN CO LTD), 3. April 1990 (1990-04-03)

## Beschreibung

Verwendung von hochmolekularem syndiotaktischen Polymer auf der Basis von vinylaromatischen Monomeren als Antitropfmittel für thermoplastische Formmassen sowie diese Antitropfmittel.

Werden thermoplastische Materialien entzündet, erweichen diese, sofern keine Vemetzungsreaktionen eintreten, zumeist recht schnell, da ihre Viskosität aufgrund der hohen Temperaturen stark abnimmt. Häufig trennen sich daher Teile des Materials vom Formkörper ab. Dieser Vorgang wird als Abtropfen oder, falls die Probe noch brennt, als brennendes Abtropfen bezeichnet. Durch abtropfende Materialteile können leicht andere Gegenstände entzündet und so ein Brandherd weitergetragen werden. Deshalb wurden bereits erhebliche Anstrengungen unternommen, wirksame Antitropfmittel für thermoplastische Formmassen zu entwickeln.

Für den Einsatz auf dem Gebiet der Elektrotechnik ist insbesondere die Prüfung der Flammwidrigkeit nach UL 94 von Bedeutung (z.B. beschrieben in J. Troitzsch, "International Plastics Flammability Handbook", S. 346 ff., Hanser Verlag, München, 1990). Bei dieser Prüfung werden vertikal befestigte Probekörper mehrfach beflammt. Dabei erhitzt sich der Probekörper sehr stark, was in vielen Fällen dazu führt, daß brennendes Polymermaterial abtropft und die unter dem Stab angebrachte Bodenwatte entzündet. Dieses unerwünschte Verhalten wird insbesondere dann beobachtet, wenn zum Erreichen kurzer Brandzeiten große Mengen an Flammschutzmittel eingesetzt werden müssen.

Das Problem des brennenden Abtropfens bei der UL 94-Prüfung ist seit langem bekannt und wird in der Technik meist durch Zusatz kleiner Mengen Teflon als Antitropfmittel gelöst (US-Patentschrift 4,107,232). Man ist jedoch aufgrund der offenkundigen Toxizität von bei der Verbrennung halogenhaltiger Substanzen freiwerdender Schadstoffe in jüngster Zeit bestrebt, den Einsatz derartiger Verbindungen in thermoplastischen Formmassen vollständig zu vermeiden.

Es ist beispielsweise bekannt, daß mittels Zusatz hochmolekularer bzw. ultrahochmolekularer Polymere zu thermoplastischen Formmassen aus Polyphenylenethern und Polystyrolen das brennende Abtropfen der Formmasse vollständig eingeschränkt oder unterbunden werden kann.

Thermoplastische Polymermischungen aus Polyphenylenether (PPE) und vinylaromatischen Polymeren wie Styrolpolymerisaten sind z.B. aus den US-Patentschriften 3,383,435; 4,128,602 sowie 4,128,603 bekannt. Solche Formmassen eignen sich zur Herstellung von Formteilen, die sich im Vergleich zu schlagzähmodifizierten Styrolpolymerisaten (HIPS, High Impact Polystyrol), die nicht mit Polyphenylenethern abgemischt sind, durch eine bessere Wärmeformbeständigkeit auszeichnen. Eine ausführliche Beschreibung der Eigenschaften dieser Polymermischungen findet sich auch in L. Bottenbruch, "Technische Polymer-Blends", Kunststoff Handbuch 3/2, S. 63 ff, Hanser Verlag, München, 1993.

Ein wesentlicher Vorteil der Polymerblends aus Polyphenylenether und Styrolpolymerisaten ist darin zu sehen, daß durch Beimengung halogenfreier Zusätze, wobei insbesondere phosphorhaltige Verbindungen zu erwähnen sind, Formmassen hergestellt werden können, die flammwidrig sind und daher für viele Anwendungen im Bereich der Elektrotechnik einsetzbar werden.

Als halogenfreies Antitropfmittel wird ultrahochmolekulares Polyethylen in der Europäischen Anmeldeschrift EP-A 550 204 beschrieben. Danach verhindert ein Zusatz an ultrahochmolekularem Polyethylen das Abtropfen von thermoplastischen Formmassen aus Polyphenylenethern und Styrolpolymeren vollständig. Aufgrund der Unverträglichkeit zwischen Polyethylen und Polyphenylenether bzw. Polystyrol führen jedoch schon kleine Mengen an Polyethylen zur Verschlechterung der mechanischen Eigenschaften der Formmassen, wobei insbesondere die Schädigungsarbeit Wₛ drastisch abfällt.

In der EP-A-305 764 werden Polystyrole mit Molekulargewichten von mehr als 400 000 g/mol und breiter Molmassenverteilung als Antitropfmittel für Blends aus Polyphenylenethem und HIPS empfohlen.

Hochmolekulares Polystyrol wird ebenfalls zur Herstellung von Polyphenylenoxid/Polystyrol-Formmassen, die für die Blasformverarbeitung geeignet sind, verwendet (EP-A 476 366). Allerdings setzt zum einen dieses Antitropfmittel die Abtropfneigung der thermoplastischen Formmassen noch nicht genügend herab, zum anderen erhöht es die Schmelzeviskosität bei den für die Spritzgussverarbeitung relevanten Schergeschwindigkeiten. Auch die Zähigkeit der Formmassen wird mit steigendem Anteil an Antitropfmittel herabgesetzt.

Besonders nachteilig ist, dass sowohl bei der Verwendung von hochmolekularem Polystyrol als auch bei der Verwendung von hochmolekularem Polyethylen als Antitropfmittel mit längeren Brandzeiten bei der UL 94-Prüfung zu rechnen ist.

Der vorliegenden Erfindung lag die Aufgabe zugrunde, ein Antitropfmittel bereitzustellen, welches die Fließfähigkeit, die Zähigkeit und insbesondere die Wärmeformbeständigkeit der Formmassen nicht nachteilig beeinflusst.

Demgemäss wurde die Verwendung von hochmolekularem syndiotaktischen Polymer auf der Basis von vinylaromatischen Monomeren als Antitropfmittel für thermoplastische Formmassen sowie diese Antitropfmittel gefunden.

Bevorzugt enthalten erfindungsgemäß flammgeschützte thermoplastische Formmassen
A) 0,5 bis 10 Gew.-% an hochmolekularem syndiotaktischen Polymer auf der Basis von vinylaromatischen Monomeren,
B) 10 bis 93,5 Gew.-% Polyphenylenether,
C) 5 bis 62,0 Gew.-% vinylaromatische amorphe Polymere,
D) 0 bis 40 Gew.-% Schlagzähmodifier,
E) 1 bis 18 Gew.-% Flammschutzmittel sowie
F) 0 bis 50 Gew.-% Zusatzstoffe oder Verarbeitungshilfsmittel oder deren Mischungen.

Die Summe der Gew.-% der einzelnen Komponenten beträgt 100.

Als Antitropfmittel (Komponente A) werden hochmolekulare syndiotaktische Polymere auf der Basis von vinylaromatischen Monomeren eingesetzt. Bevorzugt wird hochmolekulares syndiotaktisches Polystyrol verwendet. Die Komponente A) liegt in den thermoplastischen Formmassen in Mengen von 0,5 bis 25, bevorzugt 0,5 bis 15 und besonders bevorzugt von 0,5 bis 10 Gew.-%, bezogen auf das Gesamtgewicht der Formmasse, vor.

Das Molekulargewicht (M_{w}) der Komponente A) liegt üblicherweise oberhalb 800.000 g/mol. Bevorzugt sind Molekulargewichte größer 1.200.000 und insbesondere größer 1.500.000 g/mol, bestimmt mittels Gelpermeationschromatographie. Die Molekulargewichtsverteilung (M_{w}/Mₙ) nimmt im allgemeinen Werte im Bereich von 1,1 bis 6,0, vorzugsweise von 1,5 bis 5,5 an.

Geeignet als erfindungsgemäße Antitropfmittel sind in der Regel vinylaromatische Polymere, insbesondere Polystyrole, mit einem syndiotaktischen Anteil von mindestens 70 %, gemessen in rr-Triaden mittels ¹³C-NMR-Spektroskopie. Besonders geeignet ist hochmolekulares Polystyrol mit einem syndiotaktischen Anteil größer 95 % und insbesondere größer 98 %. Das verwendete hochmolekulare syndiotaktische Polymer liegt in teilkristalliner Form vor.

Die Schmelzpunkte der erfindungsgemäßen Polystyrole liegen regelmäßig oberhalb von 250°C.

Als geeignete vinylaromatische Monomere kommen Verbindungen der allgemeinen Formel IV in Frage 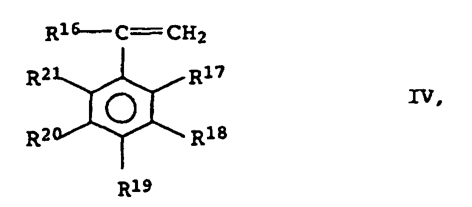 in der die Substituenten folgende Bedeutung haben:
- R¹⁶: Wasserstoff oder C₁- bis C₄-Alkyl,
- R¹⁷ bis R²¹: unabhängig voneinander Wasserstoff, C₁- bis C₁₂-Alkyl, C₆- bis C₁₈-Aryl, Halogen oder wobei zwei benachbarte Reste gemeinsam für 4 bis 15 C-Atome aufweisende cyclische Gruppen stehen.

Bevorzugt werden vinylaromatische Verbindungen der Formel IV eingesetzt, in denen
- R¹⁶: Wasserstoff bedeutet
und
- R¹⁷ bis R²¹: für Wasserstoff, C₁- bis C₄-Alkyl, Chlor oder Phenyl stehen oder wobei zwei benachbarte Reste gemeinsam für 4 bis 12 C-Atome aufweisende cyclische Gruppen stehen, so daß sich als Verbindungen der allgemeinen Formel IV beispielsweise Naphthalinderivate oder Anthracenderivate ergeben.

Beispiele für solche bevorzugten Verbindungen sind:

Styrol, p-Methylstyrol, p-Chlorstyrol, 2,4-Dimethylstyrol, 1,4-Divinylbenzol, 4-vinylbiphenyl, 2-Vinylnaphthalin oder 9-Vinylanthracen.

Als Antitropfmittel A) können auch Mischungen verschiedener vinylaromatischer Verbindungen eingesetzt werden, vorzugsweise wird jedoch nur eine vinylaromatische Verbindung verwendet.

Besonders bevorzugte vinylaromatische Verbindungen sind Styrol und p-Methylstyrol.

Es können auch Mischungen unterschiedlicher hochmolekularer syndiotaktischer vinylaromatischer Polymere eingesetzt werden, die im Molekulargewicht oder im syndiotaktischen Anteil voneinander abweichen.

Besonders bevorzugt ist Polystyrol mit einem sydiotaktischen Anteil größer 98 % und einem Molekulargewicht (M_{w}) größer 1.500.000 g/mol.

Die erfindungsgemäßen Antitropfmittel können auf verschiedene Weise mittels Übergansmetallkatalyse erhalten werden. In einem Verfahren (I) werden Metallocenkatalysatorsysteme auf der Basis von Halbsandwich-Komplexen der Metalle der Gruppen IV B und VB des Periodensystems der Elemente und offenkettigen oder cyclischen Alumoxanverbindungen als metalloceniumionenbildender Komponente verwendet, wobei die miteinander vermengten Komponenten vor der Zugabe zum Monomer einem Ageing-Prozeß unterzogen werden.

In einem weiteren Verfahren (II) wird die Polymerisation mittels eines Metallocenkatalysatorsystems, enthaltend die genannten Halbsandwich-Komplexe und metalloceniumionenbildende Verbindungen, in Gegenwart von Wasserstoff durchgeführt.

Als Metallocenkatalysatorsysteme für die genannten Verfahren sind solche bevorzugt, die als aktive Bestandteile
A) Metallocenkomplexe der allgemeinen Formel I 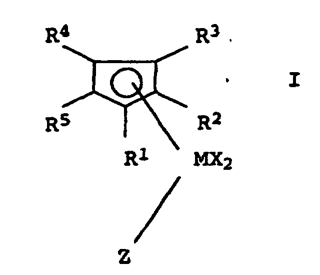 in der die Substituenten die folgende Bedeutung haben:
   - M: Titan, Zirkonium, Hafnium, Vanadium, Niob oder Tantal,
   X Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atome im Arylrest, -OR⁶ oder -NR⁶R⁷,
   wobei R⁶, R⁷ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
   R¹ bis R⁵ Wasserstoff, C₁- bis C₁₀-Alkyl, 5- bis 7-gliedriges Cycloalkyl, das seinerseits ein C₁- bis C₁₀-Alkyl als Substituent tragen kann, C₆ - bis C₁₅-Aryl oder Arylalkyl, wobei gegebenenfalls auch zwei benachbarte Reste gemeinsam für 4 bis 15 C-Atome aufweisende cyclische Gruppen stehen können oder Si(R⁸)₃ mit
   R⁸ C₁- bis C₁₀-Alkyl, C₃- bis C₁₀-Cycloalkyl oder C₆ - bis C₁₅-Aryl,
   Z für X steht
   oder wobei die Reste R⁵ und Z gemeinsam eine Gruppierung -R⁹-A- bilden, in der
   - R⁹: 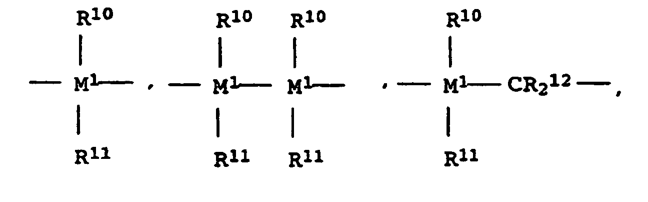 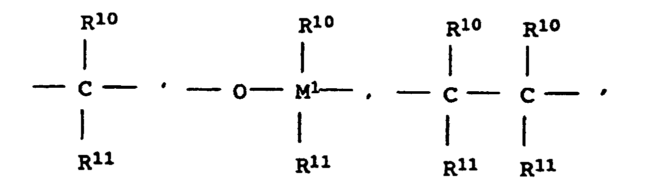 = BR¹⁰, = AlR¹⁰, -Ge-, -Sn-, -O-, -S-, = SO, = SO₂, = NR¹⁰, = CO, = PR¹⁰ oder = P(O)R¹⁰ ist,
   - wobei R¹⁰, R¹¹ und R¹²: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁰ und R¹¹ oder R¹⁰ und R¹² jeweils mit den sie verbindenden Atomen einen Ring bilden, und
   - M¹: Silicium, Germanium oder Zinn ist,
   - A: ―O―, ―S―, 〉NR¹³ oder 〉PR¹³ bedeuten, mit
   - R¹³: C₁- bis C₁₀-Alkyl, C₆- bis C₁₅-Aryl, C₃- bis C₁₀-Cycloalkyl, Alkylaryl, Si(R¹⁴)₃, 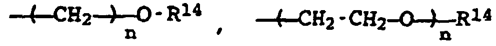 oder 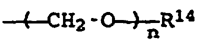 mit
   - R¹⁴: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
   und
   - n: für 1, 2 oder 3 steht
   und
B) eine metalloceniumionenbildende Verbindung
enthalten.

Besonders bevorzugte Metallocenkomplexe der allgemeinen Formel I sind solche, in denen
- M: für Titan, Zirkonium oder Hafnium, insbesondere für Titan steht,
- X: Chlor, C₁- bis C₄-Alkyl oder -OR⁶ bedeutet, mit
- R⁶: C₁- bis C₆-Alkyl, insbesondere Methyl, Ethyl, Propyl oder n-Butyl,

- R¹ bis R⁵: für Wasserstoff, C₁- bis C₆-Alkyl, insbesondere Methyl, Ethyl, Propyl, n-Butyl oder tert.-Butyl, Phenyl oder zwei benachbarte Reste gemeinsam für 4 bis 15 C-Atome aufweisende cyclische Gruppen stehen,
- Z: für X steht
oder wobei die Reste R⁵ und Z gemeinsam eine Gruppierung -R⁹-Abilden, in der
- R⁹: 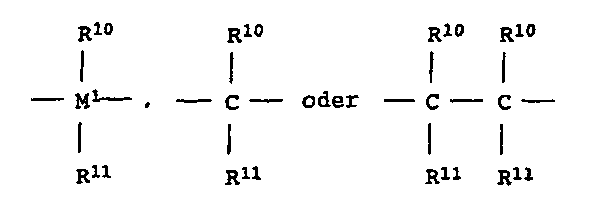 bedeutet, mit
- R¹⁰ und R¹¹: Wasserstoff oder C₁- bis C₆-Alkyl und
- M¹: Silicium,
- A: für 〉NR¹³ steht, mit
- R¹³: C₁- bis C₆-Alkyl, insbesondere Methyl, Ethyl, Propyl, n-Butyl oder tert.-Butyl, Phenyl oder 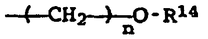
- R¹⁴: C₁- bis C₄-Alkyl, insbesondere Methyl bedeutet
und
- n: für die Zahl 2 steht.

Als besonders geeignete Metallocenkomplexe der allgemeinen Formel I sind zu nennen:
Pentamethylcyclopentadienyltitantrichlorid,
Pentamethylcyclopentadienyltitantrimethyl,
Pentamethylcyclopentadienyltitantrimethylat,
[(Methoxyethylamido)dimethylsilyl(tetramethylcyclopentadienyl)]dichlorotitan,
[(Methoxyethylamido)dimethylsilyl(tetramethylcyclopentadienyl)]dimethyltitan,
[(Methoxyethylamido)dimethylsilyl(3-tert.-butylcyclopentadienyl)]dichlorotitan,
[Methoxyethylamido)dimethylsilyl(3-tert.-butylcyclopentadienyl)]dimethyltitan,
[(Methoxyethylamido)dimethylsilyl(cyclopentadienyl)]dichlorotitan,
[(Methoxyethylamido)dimethylsilyl(cyclopentadienyl)]dimethyltitan,
[(tert.-Butylamido)dimethylsilyl(tetramethylcyclopentadienyl)]dichlorotitan.
Mischungen verschiedener Metallocenkomplexe können auch eingesetzt werden.

Die Komplexe der allgemeinen Formel I sowie Verfahren zu ihrer Herstellung sind an sich bekannt und beispielsweise in Organometallics 1995, Vol. 14, No. 7, Seite 3129 bis 3131, und im Journal of Organometallic Chemistry, 369 (1989), 359-370, beschrieben.

Als metalloceniumionenbildende Verbindung B) können die Katalysatorsysteme offenkettige oder cyclische Alumoxanverbindungen enthalten.

Geeignet sind beispielsweise offenkettige oder cyclische Alumoxanverbindungen der allgemeinen Formel II oder III 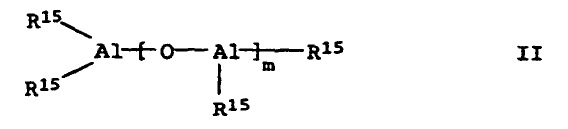 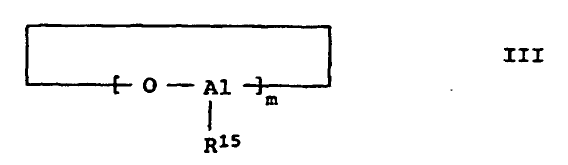
- wobei R¹⁵: eine C₁- bis C₄-Alkylgruppe bedeutet, bevorzugt Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis 10⁶:1, insbesondere im Bereich von 10:1 bis 10⁴:1, liegt.

Als Lösungsmittel für diese Katalysatorsysteme werden üblicherweise aromatische Kohlenwasserstoffe eingesetzt, bevorzugt mit 6 bis 20 C-Atomen, insbesondere Xylole und Toluol sowie deren Mischungen.

Als metalloceniumionenbildende Verbindung B) können auch Koordinationskomplexverbindungen, ausgewählt aus der Gruppe der starken, neutralen Lewissäuren, der ionischen Verbindungen mit lewissauren Kationen und der ionischen Verbindungen mit Brönstedsäuren als Kationen eingesetzt werden.

Als starke neutrale Lewissäuren sind Verbindungen der allgemeinen Formel V

M²X¹X²X³ V

bevorzugt, in der
- M²: ein Element der III. Hauptgruppe des Periodensystems bedeutet, insbesondere B, Al oder Ga, vorzugsweise B,
- X¹,X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel V, in der X¹, X² und X³ gleich sind, vorzugsweise Tris(pentafluorphenyl)boran. Diese Verbindungen sowie Verfahren zu ihrer Herstellung sind an sich bekannt und beispielsweise in der WO 93/3067 beschrieben.

Als ionische Verbindungen mit lewissauren Kationen sind Verbindungen der allgemeinen Formel VI

[(Y^{a+})Q₁Q₂...Q_{z}]^{d+} VI

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht,
- z: für ganze Zahlen von 0 bis 5
- d: der Differenz a - z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen.

Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 93/3067 genannt, bevorzugtes Kation ist das N,N-Dimethylanilinium.

Es hat sich als besonders geeignet erwiesen, wenn das molare Verhältnis von Bor aus der metalloceniumionenbildenden Verbindung zu Übergangsmetall aus dem Metallocenkomplex im Bereich von 0,1:1 bis 10:1 liegt, insbesondere im Bereich von 1:1 bis 5:1.

Die Polymerisation in Gegenwart von Wasserstoff gemäß Verfahren (II) kann unter Normal- oder auch erhöhtem Druck, zum Beispiel einem Wasserstoffpartialdruck im Bereich von 0,05 bis 6 bar durchgeführt werden.

Die genannten Verfahren können in Lösung, Dispersion oder Masse vorgenommen werden. Besonders bevorzugt ist die Massepolymerisation.

Als Komponente B) wird erfindungsgemäß wenigstens ein an sich bekannter Polyphenylenether (PPE) verwendet, wobei es sich um Homo-, Co- oder Pfropfcopolymere handeln kann. Insbesondere sind dies Verbindungen auf Basis von substituierten, insbesondere disubstituierten Polyphenylenethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome, wie Chlor oder Brom, und Alkylreste mit 1 bis 4 Kohlenstoffatomen, die vorzugsweise kein α-ständiges tertiäres Wasserstoffatom aufweisen, z.B. Methyl- Ethyl-, Propyl- oder Butylreste, zu nennen. Die Alkylreste können wiederum durch Halogenatome, wie Chlor oder Brom, oder durch eine Hydroxylgruppe substituiert sein. Weitere Beispiele möglicher Substituenten sind Alkoxyreste, vorzugsweise mit bis zu 4 Kohlenstoffatomen, wie Methoxy, Ethoxy, n-Propoxy und n-Butoxy, oder gegebenenfalls durch Halogenatome und/oder Alkylgruppen substituierte Phenylreste. Ebenfalls geeignet sind Copolymere verschiedener Phenole, beispielsweise Copolymere von 2,6-Dimethylphenol und 2,3,6-Trimethylphenol. Selbstverständlich können auch Gemische verschiedener Polyphenylenether eingesetzt werden. Die Polyphenylenether B) sind in den erfindungsgemäßen Formmassen in einer Menge von 1 bis 97,5, bevorzugt 10 bis 93,5 und insbesondere 25 bis 60 Gew.-% enthalten. Geeignete Polyphenylenether und Verfahren zu deren Herstellung werden zum Beispiel in den US-Patentschriften US- 3,306,874, US 3,306,875, US 3,257,357 und US 3,257,358 beschrieben.

Beispiele für geeignete Polyphenylenether sind Poly(2,6-dilauryl-1,4- phenylenether), Poly(2,6-diphenyl-1,4-phenylenether), Poly(2,6- dimethoxy-1,4-phenylenether), Poly(2,6-diphenxy-1,4-phenylenether), Poly(2-methoxy-6-ethoxy-1,4-phenylenether), Poly(2-ethyl- 6-stearyloxy-1,4-phenylenether), Poly-(2,6-dichlor-1,4-phenylenether), Poly(2-methyl-6-phenyl-1,4-phenylenether), Poly(2,6-dibenzyl-1,4-phenylenether), Poly(2-ethoxy-1,4-phenylenether), Poly(2-chlor-1,4-phenylenether), Poly(2,5-dibrom-1,4-phenylenether). Bevorzugt werden Polyphenylenether eingesetzt, bei denen die Substituenten Alkylreste mit 1 bis 4 Kohlenstoffatomen sind; als besonders geeignet haben sich Poly(2,6-dialkyl-1,4-phenylenether) erwiesen, wie Poly(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether oder Poly(2-ethyl-6-propyl-1,4-phenylenether). Besonders bevorzugt wird Poly(2,6-dimethyl-1,4-phenylenether) eingesetzt, insbesondere solches mit einer intrinsischen Viskosität im Bereich von 0,30 bis 0,60 dl/g (gemessen in Toluol bei 25°C und einer Konzentration von 0,6 g/100 ml).

Unter Polyphenylenether im Sinne der Erfindung sollen auch solche verstanden werden, die mit Monomeren, wie Fumarsäure, Zitronensäure, Maleinsäure oder Maleinsäureanhydrid modifiziert sind. Üblicherweise wird der Polyphenylenether durch Einbau mindestens einer Carbonyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine hinreichende Verträglichkeit mit dem zweiten Polymeren der Mischung, dem Polyamid, gewährleistet ist. Derartige Polyphenylenether sind u.a. in der WO-A 86/02086, WO-A- 87/00540, EP-A-0 222 246, EP-A-0 223 116 und EP-A-0 254 048 beschrieben.

Die Modifizierung wird im allgemeinen durch Umsetzung eines Polyphenylenethers mit einem Modifiziermittel, das mindestens eine der oben genannten Gruppen enthält, in Lösung (WO-A 86/2086), in wäßriger Dispersion, in einem Gasphasenverfahren (EP-A-25 200) oder bevorzugt in der Schmelze, gegebenenfalls in Gegenwart von geeigneten vinylaromatischen Polymeren oder Schlagzähmodifiern, durchgeführt, wobei wahlweise Radikalstarter zugegen sein können.

Besonders geeignete Modifiziermittel sind Maleinsäure, Methylmaleinsäure, Itaconsäure, Tetrahydrophthalsäure, deren Anhydride und Imide, Fumarsäure, die Mono- und Diester dieser Säuren, z.B. mit C₁- bis C₈-Alkanolen, die Mono- oder Diamide dieser Säuren wie N-Phenylmaleinimid, Maleinhydrazid, das Säurechlorid des Trimelithsäureanhydrids, Benzol-1,2-dicarbonsäureanhydrid-4-carbonsäure-essigsäureanhydrid, Chlorethanoylsuccinaldehyd, Chlorformylsuccinaldehyd, Zitronensäure und Hydroxysuccinsäure. Bevorzugt sind als Modifier Fumarsäure und Zitronensäure, besonders bevorzugt ist Zitronensäure, insbesondere wasserfreie Zitronensäure.

Die Komponente B) kann ausschließlich aus nicht modifiziertem Polyphenylenether, ausschließlich aus modidiziertem Polyphenylenether oder aus einer beliebigen Mischung von nicht modifiziertem und modifiziertem Polyphenylenether bestehen. Hinsichtlich der physikalischen Eigenschaften der Polyphenylenether werden bevorzugt solche eingesetzt, die ein mittleres Molekulargewicht M_{w} (Gewichtsmittel) von 8000 bis 70000, vorzugsweise 12000 bis 60000 und insbesondere 25000 bis 50000 g/mol, aufweisen. Dies entspricht einer Grenzviskosität von etwa 0,18 bis 0,9, vorzugsweise von 0,25 bis 0,7 und insbesondere von 0,39 bis 0,6 dl/g, gemessen in Chloroform bei 25°C nach DIN 53 726.

Die Bestimmung der Molekulargewichtsverteilung erfolgt im allgemeinen mittels Gelpermeationschromatographie (Shodex-Trennsäule 0,8 x 50 cm des Typs A 803, A 804 und A 805 mit Tetrahydrofuran (THF) als Elutionsmittel bei Raumtemperatur). Die Lösung der PPE-Proben in THF erfolgt unter Druck bei 110°C, wobei 0,16 ml einer 0,25 gew.-%igen Lösung injiziert werden. Die Detektion erfolgt im allgemeinen mit einem UV-Detektor. Die Säulen werden mit PPE-Proben geeicht, deren absolute Molekulargewichtsverteilungen über eine GPC-Laser-Lichtstreuungskombination bestimmt werden können.

Als Komponente C) werden amorphe vinylaromatische Polymere eingesetzt. Die vinylaromatischen Polymere C) unterscheiden sich von denen im Antitropfmittel enthaltenen Polymeren. Während es bei der Komponente C) grundsätzlich um amorphe Polymere handelt, stellen die Verbindungen A) stets teilkristalline oder kristalline Materialien dar. Bevorzugt sind dies schlagzähmodifizierte vinylaromatische Polymere, die mit der Komponente B) verträglich sind. Die Komponente C) ist in den erfindungsgemäßen Formmassen in Mengen von 1 bis 64,0, bevorzugt 5 bis 62 Gew.-% enthalten.

Beispiele für bevorzugte, mit Polyphenylenethern verträgliche vinylaromatische Polymere sind der Monographie von O. Olabisi, Polymer-Polymer Miscibility, Academic Press, 1979, S. 224 bis 230 und 245 zu entnehmen.

Als Homopolymerisate kommen dabei neben Polystyrol auch die Polymerisate von Styrolhomologen, wie p-Methylstyrol, α-Methylstyrol oder Divinylbenzol in iso- oder ataktischer Form, entweder allein oder in Form einer beliebigen Mischung, in Betracht.

Die Homopolymerisate werden im allgemeinen nach den bekannten Verfahren in Masse, Lösung oder Suspension hergestellt (vgl. Ullmanns Enzyklopädie der techn. Chemie, Band 19, Seiten 265 bis 272, Verlag Chemie, Weinheim, 1980; H. Gausepohl, R. Gellert, "Polystyrol", Kunststoffhandbuch 4, S. 37 - 144, Hanser Verlag, München, 1996). Die Homopolymerisate können Gewichtsmittel des Molekulargewichts M_{w} von 3000 bis 300000 aufweisen, die nach üblichen Methoden bestimmt werden können. Geeignetes Standard-Polystyrol wird nach dem Verfahren der anionischen bzw. radikalischen Polymerisation hergestellt.

Als Comonomere zur Herstellung von Copolymerisaten kommen z.B. Methacrylsäure, Methacrylsäurealkylester mit 1 bis 4 C-Atomen im Alkylrest, Cyclohexylmethacrylat, Isobornylmethacrylat, Acrylnitril, Methacrylnitril und Maleinsäureanhydrid sowie Maleinsäureimide, Acrylamid und Methacrylamide sowie deren N,N- oder N-alkylsubstituierten Derivate mit 1 bis 10 C-Atomen im Alkylrest in Frage. Beispiele für C₁₋₁₀-Alkylreste umfassen C₁₋₄-Alkylreste obiger Definition sowie n-Pentyl, n-Hexyl, n-Heptyl, n-Octyl, n-Nonyl, n-Decyl und deren verzweigte Analoga.

Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether B). Solche Mischungsgrenzen sind bekannt und beispielsweise in der US 4,360,618, 4,405,753 und in der Veröffentlichung von J.R. Fried, G.A. Hanna, Polymer Eng. Sci., Band 22 (1982), Seite 705 ff. beschrieben.

Beispiele für geeignete Copolymerisate sind Styrol-Acrylnitril-Copolymere, α-Methylstyrol-Acrylnitril-Copolymere, Styrol-Maleinsäureanhydrid-Copolymere, Styrol-Phenylmaleinimid-Copolymere, Styrol-Methylmethacrylat-Copolymere, Styrol-Methylmethacrylat-Acrylnitril-Copolymere, Styrol-Acrylnitril-Maleinsäureanhydrid-Copolymere, Styrol-Acrylnitril-Phenylmaleinimid-Copolymere, α-Methylstyrol-Acrylnitril-Methylmethacrylat-Copolymere, α-Methylstyrol-Acrylnitril-t-Butylmethacrylat-Copolymere, Styrol-Acrylnitril-t-Hutylmethacrylat-Copolymere.

Die Herstellung der Copolymeren erfolgt nach bekannten Verfahren, die beispielsweise in Ullmanns Enzyklopädie der techn. Chemie, Band 19, Verlag Chemie, Weinheim (1980), Seite 273 ff beschrieben sind. Die Copolymerisate haben im allgemeinen Gewichtsmittel des Molekulargewichts (M_{w}) von 10000 bis 300000, die nach üblichen Methoden bestimmt werden können.

Als schlagzähmodifizierte Styrolpolymerisate eignen sich Homound Copolymerisate von vinylaromatischen Monomeren mit 8 bis 12 C-Atomen, welche in Gegenwart eines Kautschuks hergestellt werden. Der Kautschukgehalt beträgt 5 bis 25 Gew.-%, vorzugsweise 8 bis 17 Gew.-%. Eine Beschreibung der Struktur, Eigenschaften und Herstellung schlagzähmodifizierter Polystyrole findet sich in der Übersichtsliteratur (A. Echte, F. Haaf, J. Hambrecht in Angew. Chem. (Int. Ed. Engl.) 20, 344-361, (1981); sowie im Kunststoffhandbuch, Band Polystyrol, Carl Hanser Verlag (1968)).

Geeignete schlagzähmodifizierte Polystyrole sind größtenteils im Handel erhältlich und weisen eine Viskositätszahl (VZ) der Hartmatrix von 50 bis 130 ml/g (0,5 %ig in Toluol bei 23°C) auf, vorzugsweise von 60 bis 90 ml/g, besonders bevorzugt von 80 ml/g.

Bevorzugt werden Standard-Polystyrol und schlagzähes Polystyrol, deren toluollöslicher Anteil ein mittleres Molekulargewicht M_{w} von 50000 bis 500000 g/mol aufweist und die gegebenenfalls noch mit Additiven, wie beispielsweise Mineralöl, Stabilisator, Antistatika, Flammschutzmittel oder Wachsen ausgerüstet sind.

Als monovinylaromatische Verbindungen für schlagzähmodifizierte Styrolpolymerisate kommen dabei insbesondere Styrol und die kernoder seitenkettensubstituierten Styrole in Betracht. Bevorzugte Substituenten sind Halogenatome, wie insbesondere Chlor und Brom, Hydroxyl und C₁₋₄-Alkyl, wie Methyl, Ethyl, n-Propyl, i-Propyl, n-Butyl und t-Butyl. Als Beispiele für diese Verbindungen seien Chlorstyrol, α-Methylstyrol, Styrol, p-Methylstyrol, Vinyltoluol und p-t-Butylstyrol genannt. Vorzugsweise wird jedoch Styrol allein verwendet.

Darüber hinaus können die eingesetzten schlagzähen Polystyrole durch die Verwendung spezieller Polybutadien-Kautschuke z.B. mit gegenüber herkömmlichen Kautschuken verändertem 1,4-cis- bzw. 1,4-trans-Anteil oder 1,2- und 1,4-Verknüpfungsanteil strukturell verändert sein. Bevorzugt sind solche schlagzähen Polystyrole mit einem Polybutadienanteil von 9 - 11 Gew.-%. Besonders bevorzugt ist dabei schlagzähes Polystyrol mit Zellteilchenmorphologie. Die mittlere Teilchengröße der Weichkomponente sollte im Bereich von 1,9 - 3,5 µm liegen. Ferner können anstelle von Polybutadienkautschuk auch andere Dienkautschuke sowie Elastomere von der Art des Ethylen-Propylen-Dien-Copolymer (EPDM-Kautschuk) sowie hydrierte Dienkautschuke eingesetzt werden.

Die am häufigsten angewandten Verfahren zur Herstellung schlagzähmodifizierter Styrolpolymerisate sind die Polymerisation in Masse oder Lösung in Gegenwart eines Kautschuks, wie beispielsweise in der US-Patentschrift 2,694,692 beschrieben, und Verfahren zur Massesuspensionspolymerisation, wie beispielsweise zu finden in der US-Patentschrift 2,862,906. Selbstverständlich sind auch andere Verfahren anwendbar, sofern die gewünschte Teilchengröße der Kautschukphase eingestellt wird.

Als Schlagzähmodifier (Komponente D) werden schlagzähmodifizierende Kautschuke in Anteilen von 0 bis 50, vorzugsweise in Anteilen von 0 bis 40 Gew.-%, bezogen auf das Gesamtgewicht der Formmasse, eingesetzt.

Als Komponente D) können von der Komponente C) verschiedene, natürliche oder synthetische Kautschuke eingesetzt werden. Neben Naturkautschuk sind als Schlagzähmodifier einsetzbar z.B. Polybutadien, Polyisopren oder Mischpolymerisate des Butadiens und/oder Isoprens mit Styrol und anderen Comonomeren, die eine Glasübergangstemperatur, bestimmt nach K.H.Illers und H.Breuer, Kolloidzeitschrift 190 (1), 16-34 (1963), von -100°C bis +25°C, vorzugsweise unter 0°C aufweisen. Außerdem können auch entsprechend hydrierte Produkte eingesetzt werden.

Bevorzugte Schlagzähmodifier D) sind Blockpolymere, insbesondere Zwei- oder Dreiblockcopolymere aus Vinylaromaten und Dienen. Schlagzähmodifier dieses Typs sind bekannt. In der DE-AS 1 932 234, der DE-AS 2 000 118 sowie der DE-OS 2 255 930 sind unterschiedlich aufgebaute vinylaromatische und Dienblöcke umfassende elastomere Blockcopolymerisate beschrieben. Die Verwendung entsprechender hydrierter Blockcopolymerisate gegebenenfalls im Gemisch mit der nicht hydrierten Vorstufe als Schlagzähmodifier ist beispielsweise beschrieben in der DE-OS 2 750 515, DE-OS 2 434 848, DE-OS 3 038 551, EP-A-0 080 666 und WO 83/01254. Auf die Offenbarung obiger Druckschriften wird hiermit ausdrücklich Bezug genommen. In Frage kommen in diesem Zusammenhang u.a. auch hydrierte Styrol-Butadien-Dreiblockcopolymere (SEBS), wie das Handelsprodukt Kraton® 1651, oder hydrierte Styrol-Isopren-Zweiblockcopolymere (SEP), wie das Handelsprodukt Kraton® 1701 (beides Produkte der Fa. Shell). Selbstverständlich können auch Mischungen von Zweiblock- und Dreiblockcopolymeren eingesetzt werden.

Bevorzugte Vinylaromaten sind Styrol, α-Methylstyrol, Vinyltoluol oder Mischungen dieser Verbindungen. Bevorzugte Diene sind Butadien, Isopren, Piperylen, 1-Phenylbutadien oder Mischungen dieser Verbindungen. Eine besonders bevorzugte Monomerkombination ist Butadien und Styrol.

Besonders bevorzugt werden die Weichblöcke aus 31 bis 75 Gew.-% Styrol und 25 bis 69 Gew.-% Butadien aufgebaut. Ganz besonders bevorzugt werden Weichblöcke, die einen Butadienanteil von 34 bis 69 Gew.-% und einen Styrolanteil von 31 bis 66 Gew.-% enthalten.

Besonders bevorzugt werden Blockcopolymere aus Styrol und Butadien mit einer Monomerzusammensetzung aus 15 bis 66, insbesondere 25 bis 62 Gew.-% Dien und 34 bis 85, insbesondere 38 bis 75 Gew.-% Vinylaromaten.

Der Volumenanteil des Weichblocks im Festkörper des Blockcopolymeren beträgt im allgemeinen von 60 bis 95, bevorzugt von 70 bis 90, insbesondere von 80 bis 88 Vol.-%. Die Volumenanteile der aus den Vinylaromaten entstandenen Hartphase beträgt entsprechend 5 bis 40, bevorzugt 10 bis 30, insbesondere 12 bis 20 Vol.-%.

Eindeutig definiert werden die Blockcopolymere durch den Quotienten aus dem Volumenanteil der Weichblöcke und den Gew.-% an Dien in den Weichblöcken. Darüberhinaus sind die Blockcopolymere in der Regel durch Glasübergangstemperaturen von -50 bis +25, insbesondere von -50 bis +5°C gekennzeichnet.

Insbesondere sind Vinylaromat-Dien-Blockcopolymerisate aus Blökken einsetzbar, die eine Hartphase (Blocktyp S) und als Weichphase einen Block L/S aus Dien- und Vinylaromaten-Einheiten enthalten, der statistischen Aufbau besitzt. Der Aufbau kann dabei entlang der Kette im statistischen Mittel homogen oder inhomogen sein. Die Kettenstruktur der Blockcopolymere kann sowohl linear als auch sternförmig sein.

Man erhält ein solches kautschukelastisches Blockcopolymerisat dadurch, daß die Weichphase aus einem statistischen Copolymerisat eines Vinylaromaten mit einem Dien gebildet wird; statistische Copolymerisate von Vinylaromaten und Dienen erhält man durch Polymerisation in Gegenwart eines polaren Cosolvens.

Ein geeignetes Blockcopolymerisat kann z.B. durch eine der folgenden allgemeinen Formeln (1) bis (11) dargestellt werden:

(1) (S-L/S)ₙ;

(2) (S-L/S)ₙ-S;

(3) L/S-(S-L/S)ₙ;

(4) X-[(S-L/S)ₙ]ₘ+1

(5) X-[(L/S-S)ₙ)ₘ+1;

(6) X-[(S-L/S)ₙ-S]ₘ+1;

(7) X-[(L/S-S)ₙ-L/S]ₘ+1;

(8) Y-[(S-L/S)ₙ]ₘ+1;

(9) Y-[(L/S-S)ₙ]ₘ+1;

(10) Y-[(S-L/S)ₙ-S]ₘ+1;

(11) Y-[(L/S-S)ₙ-L/S]ₘ+1;

wobei
- S: für einen vinylaromatischen Block,
- L/S: für die Weichphase aus einem statistisch aus Dien- und vinylaromatischen Einheiten aufgebauten Block steht,
- X: den Rest eines n-funktionellen Initiators,
- Y: den Rest eines m-funktionellen Kopplungsmittels und
- m,n: natürliche Zahlen von 1 bis 10 bedeuten.

Bevorzugt ist ein Blockcopolymerisat der allgemeinen Formeln S-L/S-S, X-[-L/S-S]₂ und Y-[-L/S-S]₂ (Bedeutung der Abkürzungen wie vorstehend) und besonders bevorzugt ein Blockcopolymerisat, dessen Weichphase unterteilt ist in Blöcke

(12) (L/S)ₐ-(L/S)_{b};

(13) (L/S)ₐ-(L/S)_{b}-(L/S)ₐ;

(14) (L/S)ₐ-(L/S)_{b}-(L/S)_{c};

wobei die Indices a, b, c für unterschiedliche Strukturen in dem Sinne stehen, daß das Vinylaromat/Dien-Verhältnis in den einzelnen Blöcken L/S unterschiedlich ist oder sich innerhalb eines Blocks in den Grenzen (L/S)ₐ(L/S)_{b} kontinuierlich ändert, wobei die Glasübergangstemperatur T_{g} jedes Teilblocks unter 25°C liegt.

Ein Blockcopolymerisat, das mehrere Blöcke L/S und/oder S mit unterschiedlicher Molmasse je Molekül aufweist, ist ebenfalls bevorzugt.

Ebenso kann an die Stelle eines ausschließlich aus vinylaromatischen Einheiten aufgebauten Blocks S ein Block L treten, da es insgesamt lediglich darauf ankommt, daß ein kautschukelastisches Blockcopolymerisat gebildet wird. Solche Copolymerisate können z.B. eine der Strukturen (15) bis (18) haben

(15) L-(L/S)

(16) (L/S)-L-(L/S)

(17) (L/S)₁-L-(L/S)₂

(18) L-(L/S)₁-(L/S)₂.

Bevorzugte Vinylaromaten sind Styrol, o-Methylstyrol, Vinyltoluol oder Mischungen dieser Verbindungen. Bevorzugte Diene sind Butadien, Isopren, Piperylen, 1-Phenylbutadien oder Mischungen dieser Verbindungen. Eine besonders bevorzugte Monomerkombination ist Butadien und Styrol.

Besonders bevorzugt sind die Weichblöcke aus 25 bis 75 Gew.-% Styrol und 25 bis 75 Gew.-% Butadien aufgebaut. Insbesondere bevorzugt sind Weichblöcke, die einen Butadienanteil von 34 bis 69 Gew.-% und einen Styrolanteil von 31 bis 66 Gew.-% enthalten.

Der Gewichtsanteil des Diens im gesamten Blockcopolymer liegt im Falle der Monomerkombination Styrol/Butadien bei 15 bis 65 Gew.-%, derjenige der vinylaromatischen Komponente entsprechend bei 85 bis 35 Gew.-%. Besonders bevorzugt sind Butadien-Styrol-Blockcopolymere mit einer Monomerzusammensetzung aus 25 bis 60 Gew.-% Dien und 75 bis 40 Gew.-% an vinylaromatischer Verbindung.

Die Blockcopolymere sind durch anionische Polymerisation in einem unpolaren Lösungsmittel unter Zusatz eines polaren Cosolvens erhältlich. Es besteht dabei die Vorstellung, daß das Cosolvens gegenüber dem Metallkation als Lewis-Base wirkt. Als Lösungsmittel werden bevorzugt aliphatische Kohlenwasserstoffe, wie Cyclohexan oder Methylcyclohexan, verwendet. Als Lewis-Basen werden polare aprotische Verbindungen, wie Ether und tertiäre Amine, bevorzugt. Beispiele für besonders effektive Ether sind Tetrahydrofuran und aliphatische Polyether wie Diethylenglycoldimethylether. Als tertiäre Amine sind Tributylamin und Pyridin zu nennen. Das polare Cosolvens wird dem unpolaren Lösungsmittel in einer geringen Menge, z.B. von 0,5 bis 5 Vol.-%, zugesetzt. Besonders bevorzugt ist Tetrahydrofuran in einer Menge von 0,1 bis 0,3 Vol.-%. Erfahrungsgemäß kommt man mit einer Menge von 0,2 Vol.-% in den meisten Fällen aus.

Durch die Dosierung und Struktur der Lewis-Base werden die Copolymerisationsparameter und der Anteil an 1,2- bzw. 1,4-Verknüpfungen der Dieneinheiten bestimmt. Geeignete Polymere haben z.B. einen Anteil von 15 bis 40 % an 1,2-Verknüpfungen und 85 bis 60 % an 1,4-Verknüpfungen bezogen auf alle Dieneinheiten.

Die anionische Polymerisation wird mittels metallorganischer Verbindungen initiiert. Bevorzugt sind Verbindungen der Alkalimetalle, besonders des Lithiums. Beispiele für Initiatoren sind Methyllithium, Ethyllithium, Propyllithium, n-Butyllithium, s-Butyllithium und t-Butyllithium. Die metallorganische Verbindung wird als Lösung in einem chemisch indifferenten (inerten) Kohlenwasserstoff zugesetzt. Die Dosierung richtet sich nach dem angestrebten Molekulargewicht des Polymers, liegt aber in der Regel im Bereich von 0,002 bis 5 Mol%, wenn man sie auf die Monomeren bezieht.

Die Polymerisationstemperatur kann 0 bis 130°C betragen. Bevorzugt wird der Temperaturbereich von 30 bis 100°C.

Für die mechanischen Eigenschaften ist der Volumenanteil der Weichphase im Festkörper von entscheidender Bedeutung. Erfahrungsgemäß liegt der Volumenanteil der aus Dien- und vinylaromatischen Sequenzen aufgebauten Weichphase bei 60 bis 95, bevorzugt bei 70 bis 90 und besonders bevorzugt bei 80 bis 90 Vol.-%. Die aus den vinylaromatischen Monomeren entstandenen Blöcke S bilden die Hartphase, deren Volumenanteil entsprechend 1 bis 40, bevorzugt 10 bis 30 und besonders bevorzugt 10 bis 20 Vol.-% ausmacht.

Meßbar ist der Volumenanteil der beiden Phasen mittels kontrastierter Elektronenmikroskopie oder Festkörper-NMR-Spektroskopie. Der Anteil der vinylaromatischen Blöcke läßt sich nach Osmiumabbau des Polydienanteils durch Fällen und Auswiegen bestimmen. Das künftige Phasenverhältnis eines Polymers läßt sich auch aus den eingesetzten Monomermengen berechnen, wenn man jedesmal vollständig auspolymerisieren läßt.

Eindeutig definiert wird das Blockcopolymere durch den Quotienten aus dem Volumenanteil in Prozent der aus den L/S-Blöcken gebildeten Weichphase und dem Anteil an Dieneinheiten in der Weichphase, der für die Kombination Styrol/Butadien zwischen 25 und 70 Gew.-% liegt.

Durch den statistischen Einbau der vinylaromatischen Verbindungen in den Weichblock des Blockcopolymeren und die Verwendung von Lewis-Basen während der Polymerisation wird die Glasübergangstemperatur (T_{g}) beeinflußt. Die Glasübergangstemperatur des gesamten Copolymers beträgt vorzugsweise -50°C bis +25°C, bevorzugt weniger als 0°C.

Das Molekulargewicht des Blocks S beträgt vorzugsweise 1000 bis 200000, insbesondere 3000 und 80000 [g/mol]. Innerhalb eines Moleküls können S-Blöcke unterschiedliche Molmasse haben.

Das Molekulargewicht des Blocks L/S beträgt üblicherweise von 2000 bis 250000 [g/mol]; bevorzugt sind Werte von 5000 bis 150000 [g/mol].

Auch Block L/S kann wie Block S innerhalb eines Moleküls unterschiedliche Molekulargewichtswerte einnehmen.

Das Kupplungszentrum X wird durch die Umsetzung der lebenden anionischen Kettenenden mit einem mindestens bifunktionellen Kupplungsagens gebildet. Beispiele für derartige Verbindungen sind in den US-Patentschriften 3,985,830; 3,280,084; 3,637,554 und 4,091,053 zu finden. Bevorzugt werden z.B. epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde, wie Terephthalaldehyd, und Ester, wie Ethylformiat oder -benzoat, geeignet.

Bevorzugte Polymerstrukturen sind S-L/S-S, X-[-L/S-S]₂ und Y-[-L/S-S]₂, wobei der statistische Block L/S selbst wieder in Blöcke L1/S1-L2/S2-L3/S3-... unterteilt sein kann. Bevorzugt besteht der statistische Block aus 2 bis 15 statistischen Teilblöcken, besonders bevorzugt aus 3 bis 10 Teilblöcken. Die Aufteilung des statistischen Blocks L/S in möglichst viele Teilblöcke Ln/Sn bietet den entscheidenden Vorteil, daß auch bei einem Zusammensetzungsgradienten innerhalb eines Teilblocks Ln/Sn, wie er sich in der anionischen Polymerisation unter praktischen Bedingungen nur schwer vermeiden läßt, sich der L/S-Block insgesamt wie ein nahezu perfektes statistisches Polymer verhält. Es bietet sich deshalb an, weniger als die theoretische Menge an Lewis-Base zuzusetzen, was den Anteil 1,4-Dienverknüpfungen erhöht, die Glastemperatur Tg absenkt und die Vernetzungsanfälligkeit des Polymeren mindert. Ein größerer oder ein kleinerer Anteil der Teilblöcke kann mit einem hohen Dienanteil ausgestattet werden. Dies bewirkt, daß das Polymer auch unterhalb der Glastemperatur der überwiegenden L/S-Blöcke eine Restzähigkeit behält und nicht vollständig versprödet.

Alle oben angegebenen Gewichts- und Volumenangaben beziehen sich auf die Monomerkombination Butadien/Styrol. Diese Angaben können jedoch ohne weiteres auf andere zu Styrol und Butadien technisch äquivalente Monomere umgerechnet werden.

Die Blockcopolymeren können dadurch aufgearbeitet werden, daß die Carbanionen mit einem Alkohol, wie Isopropanol, protoniert werden, die Reaktionsmischung angesäuert wird, z.B. mit einem Gemisch aus CO₂ und Wasser und das Lösungsmittel entfernt wird. Die Blockcopolymeren können Oxidationsinhibitoren und Antiblockmittel enthalten.

Auch Mischungen obiger Schlagzähmodifier sind einsetzbar.

Als Komponente E enthalten die Zusammensetzungen Flammschutzmittel in Mengen von 1 bis 20, bevorzugt von 1 bis 18, insbesondere von 1 bis 15 Gew.-%, bezogen auf die gesamte Zusammensetzung an Komponente E.

Als Flammschutzmittel können phosphororganische Verbindungen, wie Phosphate oder Phosphinoxide eingesetzt werden.

Beispiele für Phosphinoxide sind Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl)-phosphinoxid, Tris-(n-octyl)-phosphinoxid, Tris-(cyanoethyl)-phosphinoxid, Benzylbis(cyclohexyl)-phosphinoxid, Benzylbisphenylphosphinoxid, Phenylbis-(n-hexyl)-phosphinoxid. Besonders bevorzugt eingesetzt werden Triphenylphosphinoxid, Tricyclohexylphosphinoxid, Tris-(n-octyl)-phosphinoxid oder Tris-(cyanoethyl)-phosphinoxid.

Als Phosphate kommen vor allem alkyl- und arylsubstituierte Phosphate in Betracht. Beispiele sind Phenylbisdodecylphosphat, Phenylbisneopentylphosphat, Phenylethylhydrogenphosphat, Phenyl-bis-(3,5,5-trimethylhexylphosphat), Ethyldiphenylphosphat, Bis-(2-ethylhexyl)-p-tolyl-phosphat, Tritolylphosphat, Trixylylphosphat, Trimesitylphosphat, Bis-(2-ethylhexyl)-phenylsphosphat, Tris-(nonylphenyl)-phosphat, Bis-(dodecyl)-p-(tolyl)-phosphat, Tricresylphosphat, Triphenylphosphat, Di-butylphenylphosphat, p-Tolyl-bis-(2,5,5-trimethylhexyl)-phosphat, 2-Ethylhexyldiphenylphosphat. Besonders geeignet sind Phosphorverbindungen, bei denen jedes R ein Aryl-Rest ist. Ganz besonders geeignet ist dabei Triphenylphosphat, Trixylylphosphat sowie Trimesitylphosphat. Des weiteren können auch cyclische Phosphate eingesetzt werden. Besonders geeignet ist hierbei Diphenylpentaerythritol-diphosphat.

Darüber hinaus können Mischungen unterschiedlicher Phosphorverbindungen verwendet werden. Bevorzugt werden beispielsweise Mischungen, die aufgebaut sind aus
α) mindestens einem Phosphinoxid der allgemeinen Formel 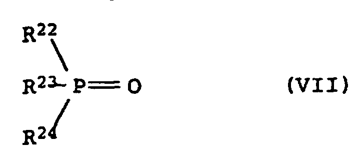 wobei R²², R²³ und R²⁴ gleiche oder verschiedene Alkyl-, Aryl-, Alkylaryl- oder Cycloalkylgruppen mit 8 bis 40 C-Atomen bedeuten und
β) mindestens einem Phosphat der allgemeinen Formel 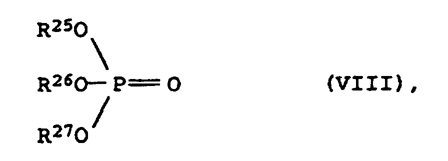 in der die Substituenten R²⁵, R²⁶ und R²⁷ gleiche oder verschiedene Alkyl-, Aryl-, Alkylaryl- oder Cycloalkylgruppen mit 8 bis 40 C-Atomen bedeuten,
   sowie
γ) einer Borverbindung.

Besonders bevorzugt sind Mischungen aus folgenden Phosphinoxid α)- und Phosphat β)-Kombinationen: Triphenylphosphinoxid-Triphenylphosphat oder Trixylylphosphat, Tricyclohexylphosphinoxid und Triphenylphosphat, Tris(cyanoethyl)phosphinoxid und Triphenylphosphat, Tris-(n-octyl)-phospinoxid und Triphenylphosphat. Es können auch Mischungen aus mehreren Phosphinoxiden und Phosphaten eingesetzt werden, wie etwa die Mischung Triphenylphosphinoxid, Triphenylphosphat, Trixylylphosphat.

Unter Borverbindungen γ) sollen sowohl anorganische als auch organische Borverbindungen verstanden werden.

Beispiele für anorganische Borverbindungen sind Borsäure, B₂O₃ und Salze-der Borsäure, bevorzugt mit Alkali- oder Erdalkalimetallen. Besonders bevorzugt sind Borsäure, Natriumborat oder Boroxid.

Organische Borverbindungen γ) sind beispielsweise Tetraphenylborate, z.B. Natriumtetraphenylborat und Tribenzylborat.

Die Zusammensetzung der Mischung beträgt im allgemeinen (bezogen auf den Gehalt der gesamten Mischung)
α) 1 bis 98,9, bevorzugt 10 bis 85 und insbesondere 20 bis 70 Gew.-%,
β) 1 bis 98,9, bevorzugt 10 bis 85 und insbesondere 20 bis 70 Gew.-%,
γ) 0,1 bis 70, bevorzugt 5 bis 50 und insbesondere 10 bis 30 Gew.-%.

Darüberhinaus sind phosphororganische Verbindungen der allgemeinen Formeln IX bis XI als Flammschutzmittel geeignet. 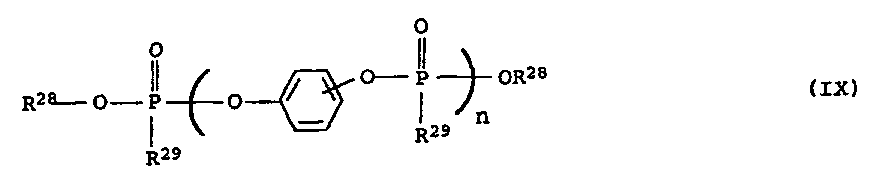 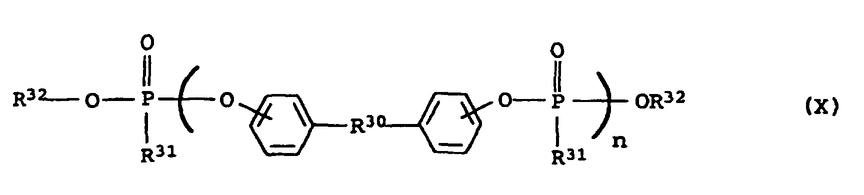 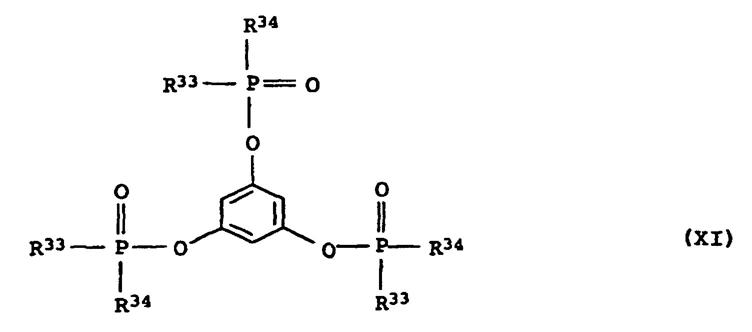 wobei R²⁸ und R³² Alkyl- oder Aryl-, R²⁹, R³¹, R³³ und R³⁴ Alkyl-, Aryl-, Alkoxy oder Aryloxy, n und p eine ganze Zahl von 1 bis 30 bedeuten, R³⁰ Alkylen, -SO₂-, -CO-, -N=N-, R³⁵-P=O bedeutet, wobei R³⁵ Alkyl-, Aryl- oder Alkylaryl- ist.

Meist werden Mischungen verschiedener Oligomerer oder Isomerer dieser phosphororganischen Verbindungen eingesetzt.

Das Molekulargewicht beträgt im allgemeinen nicht mehr als 1 000, bevorzugt 150 bis 800.

Als Flammschutzmittel sind schließlich auch solche Verbindungen geeignet, die Phosphor-Stickstoff-Bindungen enthalten, wie Phosphonnitrilchlorid, Phosphorsäureesteramide, Phosphorsäureesteramine, Phosphorsäureamide, Phosphonsäureamide, Phosphinsäureamide, Tris(aziridinyl)-phosphinoxid oder Tetrakis(hydroxymethyl)phosphoniumchlorid. Diese entflammungshemmenden Additive sind größtenteils im Handel erhältlich. Auch roter Phosphor kommt als Flammschutzmittel in Frage.

Weiterhin können als Flammschutzmittel polymere Siloxanverbindungen oder Borverbindungen, wie in der EP-A 0 714 951 beschrieben, eingesetzt werden. Als siliziumhaltige Flammschutzmittel kommen solche aus der Gruppe der Siloxancopolymere, zum Beispiel Polyphenylenether/- oder Polyetherimid/siloxancopolymere in Frage. Derartige Polysiloxane sind im Handel erhältlich. Unter geeignete Borverbindungen fallen sowohl anorganische als auch organische Borverbindungen, beispielsweise Borsäure, Metallborate, Phosphate der Borsäure oder Perborate, insbesondere Metallborate oder -perborate, wie Alkalimetallborate (z.B. Natrium oder Kalium), Erdalkalimetallborate (z.B. Calcium, Barium oder Magnesium) oder Übergangsmetallborate wie Zinkborat. Die Metallborate und -perborate werden bevorzugt in wasserfreier Form eingesetzt. Der Anteil der Borverbindungen an den erfindungsgemäßen Formmassen liegt vorzugsweise, bezogen auf die Menge an Bor, im Bereich von 0,02 bis 5, bevorzugt von 0,2 bis 1 Gew.-%.

Als Komponente F können die Zusammensetzungen Zusatzstoffe oder Verarbeitungshilfsmittel oder deren Mischungen enthalten. Der Anteil der Komponente F beträgt im allgemeinen von 0 bis 60 Gew.-%, bezogen auf die gesamte Zusammensetzung. Bevorzugt beträgt er nicht mehr als 50 Gew.-% und insbesondere nicht mehr als 30 Gew.-%, bezogen auf die gesamte Zusammensetzung.

Als Zusatzstoffe seien genannt Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Glasfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide.

Des weiteren kommen Gleitmittel wie Polyethylenwachs als Zusatzstoffe in Betracht.

Ruße oder Titandioxid können beispielsweise als Pigmente verwendet werden.

Bei Verwendung von TiO₂ liegt die mittlere Teilchengröße in der Regel im Bereich von 50 bis 400 nm, insbesondere von 150 bis 240 nm. Technische Verwendung finden Rutile und Anatas, die gegebenenfalls mit Metalloxiden, z.B. Aluminiumoxiden, Siliciumoxiden, Oxiden des Zn oder Siloxanen beschichtet sind.

Als Ruße sollen mikrokristalline, feinteilige Kohlenstoffe verstanden werden (vgl. Kunststofflexikon, 7. Auflage 1980).

Als geeignet seien die Ofenruße, Acetylenruße, Gasruße sowie die durch thermische Herstellung erhältlichen Thermalruße genannt.

Die Teilchengrößen liegen vorzugsweise im Bereich von 0,01 bis 0,1 µm und die Oberflächen im Bereich von 10² bis 10⁴ m²/g (BET/ASTM D 3037) bei DBP-Absorptionen von 10² bis 10³ ml/100 g (ASTM D 2414).

Wesentlich ist bei den Glas- und Kohlenstoffasern der Komponente F) die mittlere Faserlänge l₅₀ im Granulat oder im Formkörper, da diese Formkörper ein sehr gutes mechanischen Eigenschaftsprofil aufweisen, wenn die mittlere Faserlänge l₅₀ 150 bis 400 µm, bevorzugt 170 bis 300 µm und insbesondere 180 bis 280 µm beträgt. Als mittlere Faserlänge l₅₀ wird im allgemeinen der Wert bezeichnet, bei dem 50 % der Fasern eine kleinere und 50 % der Fasern eine größere Länge als der l₅₀-Wert aufweisen. Im allgemeinen haben die verwendeten Fasern einen Durchmesser im Bereich von 6 bis 20 µm.

Die Glasfasern können sowohl alkalimetallhaltig als auch frei von Alkalimetallen sein. Bei der Verwendung von Glasfasern können diese zur besseren Verträglichkeit mit dem Thermoplasten mit einer Schlichte, z.B. Polyurethan oder Epoxid und einem Haftvermittler, z.B. Aminotrialkoxisilanen ausgerüstet sein. Im übrigen können auch die unter Komponente C) aufgeführten Schlichtematerialien zur Anwendung kommen.

Die Einarbeitung dieser Glasfasern kann sowohl in Form von Kurzglasfasern als auch in Form von Endlossträngen (Rovings) erfolgen.

Oxidationsverzögerer und Hitze- bzw. Wärmestabilisatoren, die den erfindungsgemäßen thermoplastischen Formmassen zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.-%, bezogen auf das Gewicht der Mischung, einsetzbar.

Beispiele für Licht- bzw. UV-Stabilisatoren sind verschiedene substituierte Resorcine, Salicylate, Benzotriazole und Benzophenone, die im allgemeinen in Mengen bis zu 2 Gew.-% eingesetzt werden.

Materialien zur Erhöhung der Abschirmung gegen elektromagnetische Wellen, wie Metallflocken, -pulver, -fasern, metallbeschichtete Füllstoffe und leitfähige Polymere können ebenfalls mitverwendet werden.

Gleit- und Entformungsmittel, die in der Regel in Mengen bis zu 1 Gew.-% der thermoplastischen Masse zugesetzt werden, sind z.B. Stearinsäure, Stearylalkohol, Stearinsäurealkylester und amide sowie Ester des Pentaerythrits mit langkettigen Fettsäuren.

Unter Zusatzstoffe fallen auch Stabilisatoren, die die Zersetzung des roten Phosphors als Flammschutzmittel E) in Gegenwart von Feuchtigkeit und Luftsauerstoff verhindern. Als Beispiele seien Verbindungen des Cadmiums, Zinks, Aluminiums, Silbers, Eisens, Kupfers, Antimons, Zinns, Magnesiums, Mangans, Vanadiums, Bors, Aluminiums und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate und Sulfate.

Die Herstellung der erfindungsgemäßen thermoplastischen Formmassen erfolgt zweckmäßigerweise durch Mischen der Komponenten bei Temperaturen im Bereich von 250 bis 320°C in üblichen Mischvorrichtungen, wie Knetern, Banburymischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls drei Komponenten vorgemischt sein oder es können auch alle Komponenten gemeinsam gemischt werden.

Aus den erfindungsgemäßen thermoplastischen Formmassen lassen sich z.B. durch Spritzguß oder Extrusion Formkörper herstellen. Sie können weiterhin zur Herstellung von Folien oder Halbzeugen im Tiefzieh- oder Blasverfahren verwendet werden.

Die erhaltenen Formkörper verfügen über eine gute Fließfähigkeit bei gleichzeitig guter Zähigkeit. Des weiteren weisen die erfindungsgemäßen Materialien einen effektiven Flammschutz und keine Abtropfneigung gemäß Ul-94 auf. Von besonderem Vorteil ist, daß die erfindungsgemäßen Formmassen bzw. die daraus erhältlichen Formkörper ausgezeichnet wärmeformbeständig sind.

Die Erfindung wird anhand der nachfolgenden Beispiel näher erläutert.

### Beispiele:

Die Komponenten A) bis F) der erfindungsgemäßen thermoplastischen Formmasse wurden auf einem Zweischneckenextruder (ZSK 53 der Fa. Werner & Pfleiderer) bei Temperaturen im Bereich von 270 bis 310°C gemischt, aufgeschmolzen, extrudiert, anschließend granuliert und getrocknet.

Aus den folgenden Komponenten wurden Formmassen hergestellt und anwendungstechnisch untersucht:
Komponente A-1
   Ultrahochmolekulares sydiotaktisches Polystyrol: M_{w} = 1.980.000 g/mol, M_{w}/Mₙ = 3,4, Schmelzpunkt = 270,1°C, syndiotaktischer Anteil in Triaden = 98,5 % (bestimmt mittels ¹³C-MNR).
Komponente A-V1
   Hochmolekulares ataktisches Polystyrol, hergestellt mittels anionischer Polymerisation gemäß D.B. Priddy, M. Pirc, J. of Appl. Polymer Science 37, 393-402 (1989):
   M_{w} = 1.000.000 g/mol, M_{w}/Mₙ = 1,8.
   Der Schmelzpunkt der Komponente A wurde mittels Differentialthermoanalyse an einem Gerät Thermal Analyst 2000 mit DSC Modul 912 der Fa. TA Instruments bestimmt. Die Molekulargewichte wurden mit Hilfe der Gelpermeationschromatographie an Shodex UT 807 und UT 806 mit 1,2,4-Trichlorbenzol als Eluens bei 130°C gegen Polystyrolstandards ermittelt.
Komponente B-1
   Poly-2,6-dimethyl-1,4-phenylenether mit einem mittleren Molekulargewicht (M_{w}) von 40.000 g/mol.
Komponente C-1
   Schlagfestes Polystyrol (M_{w}/Mₙ = 2,4) mit 9 Gew.-% Polybutadien und Zellteilchenmorphologie, mittlere Teilchengröße der weichkomponente von 1,9 µm. Die Viskositätszahl (VZ) der Hartmatrix betrug 80 ml/g (0.5 %ig in Toluol bei 23°C).
Komponente C-2
   Schlagfestes Polystyrol (M_{w}/Mₙ = 2,3) mit 11 Gew.-% Polybutadien und Zellteilchenmorphologie, mittlere Teilchengröße der Weichkomponente von 3,5 µm. Die Viskositätszahl (VZ) der Hartmatrix betrug 80 ml/g (0,5 %ig in Toluol bei 23°C).
Komponente D-1
   Hydriertes Styrol-Butadien-Dreiblockcopolymer (SEBS) mit einem Styrolgehalt von 29 Gew.-% (Kraton® 1701, Fa. Shell).
Komponente E-1
   Resorcinoldiphoshat (z.B. Fyroflex® RDP der Fa. Akzo).
Komponente F-1
   Ruß (z.B. Black Pearls® 880 der Fa. Cabot) (als 15%iger Batch in Polystyrol, M_{w}/Mₙ = 2,4; Viskositätszahl (VZ) 80 ml/g (0,5 %ig in Toluol bei 23°C).

Das getrocknete Granulat aus den Komponenten A) bis F) wurde bei 280°C zu
i) Flachstäben (127 x 12,7 x 1,6 mm) für die Brandprüfung gemäß Ul-94 und
ii) gekerbten Normkleinstäben für die Bestimmung der Kerbschlagzähigkeit 'ak' bei 23°C gemäß ISO 179 verarbeitet.

Die Wärmeformbeständigkeit (Vicat B) der Proben wurde gemäß ISO 306 und die Fließfähigkeit (MVI) entsprechend DIN 53 735 bei 250°C und einer Belastung von 21,6 kg ermittelt.

Um die Flammfestigkeiten und das Abtropfverhalten zu messen, wurden die Flachstäbe nach UL-94 beflammt.

Die Einstufung eines flammgeschützten Thermoplasten in die Brandklasse UL-94 V0 erfolgt, wenn folgende Kriterien erfüllt sind:

Bei einem Satz von 5 Proben der Abmessungen 127 x 12,7 x 1,6 mm dürfen alle Proben nach zweimaliger Beflammung von 10 s Zeitdauer mit einer offenen Flamme (Höhe 19 mm) nicht länger als 10 s nachbrennen. Die Summe der Nachbrennzeiten bei 10 Beflammungen von 5 Proben darf nicht größer sein als 50 s. Es darf kein brennendes Abtropfen, vollständiges Abbrennen oder ein Nachglühen von länger als 30 s erfolgen. Die Einstufung in die Brandklasse UL 94 V1 erfordert, daß die Nachbrennzeiten nicht länger als 30 s sind und daß die Summe der Nachbrennzeiten von 10 Beflammungen von 5 Proben nicht größer als 250 s ist. Das Nachglühen darf nicht länger als 60 s dauern. Die übrigen Kriterien sind identisch mit den oben erwähnten. Eine Einstufung in die Brandklasse UL 94 V2 erfolgt dann, wenn es bei Erfüllung der übrigen Kriterien zur Einstufung UL 94 V1 zu brennendem Abtropfen kommt.

Die Zusammensetzungen und Eigenschaften der thermoplastischen Formmassen sind in Tabelle 1 zusammengefaßt.

**Tabelle 1**

| Beispiel Nr. | 1^{a)} | 2 | 3 |
|---|---|---|---|
| Komponente [Gew.-%] | | | |
| A-1 | - | 3 | 3 |
| A-V1 | 3 | - | - |
| B-1 | 40 | 40 | 40 |
| C-1 | 41 | 41 | 37 |
| C-2 | - | - | 4 |
| D-1 | 3 | 3 | 3 |
| E-1 | 10 | 10 | 10 |
| F-1 | 3 | 3 | 3 |
| Eigenschaften | | | |
| Vicat B [°C] | 105 | 110 | 109 |
| aₖ [kJ/m²] | 10,6 | 11,4 | 12,1 |
| UL 94 | V-2 | V-1 | V-1 |
| MVI[ml/10 min] | 163 | 168 | 179 |

| | | | |
|---|---|---|---|
| ^{a)} Vergleichsversuch | | | |

Die thermoplastischen Formmassen, die die erfindungsgemäßen Antitropfmittel enthalten, zeichnen sich durch gute mechanische Eigenschaften, gute Fließfähigkeit, geringe Abtropfneigung und gute Wärmeformbeständigkeit aus.

## Patentansprüche

1. Halogenfreie Antitropfmittel für thermoplastische Formmassen, im wesentlichen enthaltend hochmolekulare syndiotaktische Polymere auf der Basis von vinylaromatischen Monomeren
**dadurch gekennzeichnet, dass** das Polymer ein syndiotaktisches Polystyrol mit einem Molekulargewicht M_{w} größer 1.500.000 g/mol und einem syndiotaktischen Anteil größer 98 %, gemessen in rr-Triaden mittels ¹³C-NMR-Spektroskopie ist.

2. Verwendung von hochmolekularem syndiotaktischem Polymer auf der Basis von vinylaromatischen Monomeren als Antitropfmittel für thermoplastische Formmassen.

## Claims

1. Halogen-free anti-dripping agents for thermoplastic molding materials, essentially containing high-molecular weight syndiotactic polymers based on vinyl-aromatic monomers, **characterized by** the polymer being a syndiotactic polystyrene with a molecular weight M_{w} in excess of 1,500,000 g/mol and a syndiotactic fraction in excess of 98 %, measured in rr-triads by means of ¹³C-NMR spectroscopy.

2. Use of high molecular weight syndiotactic polymer based on vinyl-aromatic monomers as anti-dripping agent for thermoplastic molding materials.

## Revendications

1. Agent anti-coulage sans halogènes pour masses à mouler thermoplastiques, contenant essentiellement des polymères syndiotactiques à poids moléculaire élevé à base de monomères vinylaromatiques,
**caractérisé en ce que** le polymère est un polystyrène syndiotactique ayant un poids moléculaire M_{w} supérieur à 1 500 000 g/mol et une fraction syndiotactique supérieure à 98%, mesurée en triades rr au moyen d'une spectroscopie RMN ¹³C.

2. Utilisation d'un polymère syndiotactique à poids moléculaire élevé à base de monomères vinylaromatiques comme agent anti-coulage pour masses à mouler thermoplastiques.
